(19) Europäisches Patentamt
European Patent Office
Office européen des brevets

(11) **EP 0 722 096 B1**

(12) **FASCICULE DE BREVET EUROPEEN**

(45) Date de publication et mention
de la délivrance du brevet:
**11.04.2001 Bulletin 2001/15**

(51) Int Cl.⁷: **G01V 3/28**

(21) Numéro de dépôt: **96400038.4**

(22) Date de dépôt: **08.01.1996**

(54) **Dispositif de cartographie d'un milieu par mesure à induction**

Vorrichtung zur Kartierung eines Mediums durch Induktionsmessung

Device for mapping a medium by induction measurement

(84) Etats contractants désignés:
**DE GB IT**

(30) Priorité: **10.01.1995 FR 9500198**

(43) Date de publication de la demande:
**17.07.1996 Bulletin 1996/29**

(73) Titulaire: **COMMISSARIAT A L'ENERGIE ATOMIQUE**
**75015 Paris (FR)**

(72) Inventeurs:
• **Chaillout, Jean-Jacques**
**F-38960 Saint Etienne de Crossey (FR)**
• **Locatelli, Marcel**
**F-38330 Saint-Ismier (FR)**
• **Giordano, Patrice**
**F-84120 Pertuis (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 368 762**      **WO-A-92/22834**
**GB-A- 2 121 189**      **US-A- 4 278 941**
**US-A- 4 837 517**      **US-A- 5 065 099**
**US-A- 5 157 605**

• **PETROLEUM TRANSACTIONS, AIME, Juin 1949, pages 148-162, XP002000537 H.-G. DOLL:**

## Description

Domaine technique

L'invention concerne un dispositif permettant la réalisation de profils d'investigation ou de cartographie d'un milieu, à partir de mesures réalisées par induction.

Le domaine d'application peut être quelconque. Il suffit que l'appareil puisse traverser un milieu selon un axe, par exemple dans le cas d'un forage, le terrain entourant le puits de forage étant alors le milieu à caractériser afin de déterminer les différentes couches géologiques ainsi que leur aptitude à contenir des liquides, par exemple de l'eau ou du pétrole. L'invention s'applique aussi au domaine de l'exploration maritime, le milieu de mesure étant alors l'océan dans lequel on veut connaître les caractéristiques des différentes thermoclynes.

Etat de la technique

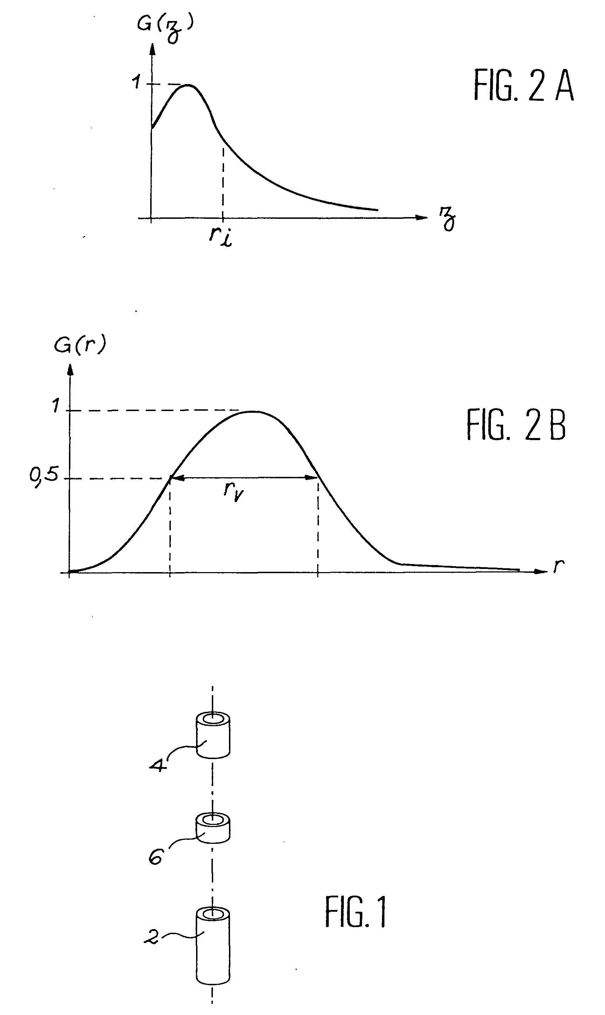

L'article de H.G. Doll, intitulé "Introduction to induction logging and application to logging of wells drilled with oil base mud" paru dans Petroleum Transaction, juin 1949, pp. 148-162 décrit un outil d'investigation ainsi que les grandeurs caractérisant ses performances. Un tel outil est rappelé sur la figure 1 où on distingue une bobine émettrice 2 qui est parcourue par un courant sinusoïdal, une bobine réceptrice 4 et une bobine de contre-réception 6 permettant de focaliser la mesure, c'est-à-dire de limiter selon l'axe z (axe de l'outil) les zones mesurées. La mesure du signal en phase avec l'émetteur permet d'accéder à la perméabilité environnante à travers l'effet du terrain sur le champ magnétique produit par l'émetteur. Le signal en quadrature avec l'émetteur permet la caractérisation de la conductivité environnante par la mesure du champ magnétique provenant des courants de Foucault engendrés par l'émetteur 2 dans le milieu à mesurer. Bien sûr, la mesure simultanée de ces deux signaux permet d'accéder à l'ensemble de ces grandeurs.

Ce type d'outil présente deux grandeurs caractéristiques : la résolution verticale et la profondeur d'investigation. Les outils connus ne permettent pas de mesurer simultanément plusieurs profils radiaux avec des caractéristiques imposées. Il est nécessaire, pour mesurer simultanément plusieurs profils radiaux, soit d'effectuer plusieurs passages de l'outil dans le milieu, soit de traiter les mesures pour corriger les caractéristiques des outils. Par ailleurs, ces grandeurs caractéristiques négligent la contribution au signal de tout le terrain et considèrent la zone de détection comme rectangulaire, ce qui est faux dans la pratique. La zone réellement mesurée est délimitée par deux arcs de cercle définis par les lois de la physique. La simplification consistant à considérer la zone de détection comme rectangulaire aboutit donc à des erreurs de mesure dès que l'on s'éloigne du dispositif.

L'invention a pour objet un appareil permettant de déterminer simultanément à différents rayons (ou profondeurs d'investigation) le milieu traversé par cet appareil selon un axe. Avec cet appareil, on obtient des mesures de conductivité qui ont la même résolution verticale pour différentes profondeurs d'investigation par rapport à l'axe de mesure.

Plus précisément, l'invention a pour objet un dispositif de mesure par induction comportant :

- une bobine émettrice (E),
- n bobines réceptrices, $B_k$, k=1, 2,...,n avec n≥3,
- des moyens numériques pour sélectionner un couple $(B_i, B_j)$ de bobines réceptrices et pour réaliser une différence pondérée $r_iS_i-k_jS_j$ entre les signaux $S_i$, $S_j$ des deux bobines du couple sélectionné.

Avec un tel appareil, il est possible de déterminer simultanément, à différentes profondeurs d'investigation, le milieu traversé. On obtient différentes profondeur d'investigation en fonction du couple de bobines réceptrices choisi. Le choix des couples de bobines reste complètement libre pour l'opérateur, et conduit à un nombre d'outils supérieur à celui des bobines connues selon l'art antérieur. Par ailleurs, à chaque couple de bobines correspond une résolution verticale spécifique à ce couple de bobines.

Selon un mode particulier de réalisation, le rapport $k_j/r_i$ est sélectionné de telle façon que, si $N_i$ (respectivement $N_j$) est le nombre de spires de la bobine $B_i$ (respectivement $B_j$) et $z_i$ (respectivement $z_j$) est la distance de la bobine $B_i$ (respectivement $B_j$) à la bobine émettrice E, la relation suivante est satisfaite :

$$N_j=(k_j/r_i)N_i \cdot (z_i/z_j)^2.$$

Dans ce mode particulier de réalisation, on obtient une focalisation parfaite, c'est-à-dire que le facteur de forme vertical est nul entre la bobine $B_i$ et la bobine $B_j$ (couple émetteur-contre-récepteur).

Le coefficient $k_j$ peut être choisi égal à 1, ou il peut être proportionnel à la cote du contre-récepteur (c'est-à-dire à la distance $B_j$-E) ou il peut être proportionnel au carré de la cote du contre-récepteur.

Le coefficient $r_i$ peut être choisi égal à 1.

Selon un autre mode particulier de réalisation de l'invention, la distance entre deux bobines successives est constante, égale à $\Delta B$. Dans ce cas, si le couple de bobines sélectionné est un couple de deux bobines voisines, la résolution verticale $R_v$ obtenue pour ce couple de bobines est constante et égale à $\sqrt{2}.\Delta B$, et la différence de profondeur d'investigation entre deux couples consécutifs est également constante et égale à $\Delta P=2\Delta B$.

Afin de résoudre le problème du champ magnétique émis directement par l'émetteur dans les récepteurs, un dispositif conforme à l'invention comprend en outre des moyens pour s'affranchir du champ émis directement par l'émetteur.

Ces moyens peuvent consister en une bobine de compensation $B_{ci}$ montée en série avec chaque bobine $B_i$.

Selon un mode particulier de cette variante, le nombre de spires $N_{ci}$ de la bobine de compensation $B_{ci}$ est choisi selon la relation : $N_{ci}=N_i(z_{ci}/z_i)^3$ , où $z_{ci}$ représente la distance entre la bobine de compensation $B_{ci}$ et la bobine émettrice E.

Il est possible de placer les bobines de compensation entre l'émetteur E et le premier récepteur $B_1$. Ceci permet de diminuer le nombre de spires des bobines contre-réceptrices, et donc leur taille, et de minimiser leur influence sur les facteurs de forme.

L'invention a également pour objet un procédé de mesure par induction des caractéristiques d'un milieu, comportant les étapes suivantes :

- induction de courants de Foucault dans ledit milieu à l'aide d'une bobine émettrice,
- réception de signaux dans n bobines réceptrices, $B_k$, k=1, 2,...n, avec n≥3, en réponse aux courants de Foucault induits,
- sélection d'un couple $B_i$, $B_j$ de bobines parmi les n bobines réceptrices,
- formation d'une différence pondérée $r_iS_{j-kj}S_j$ entre les signaux $S_i$, $S_j$ des deux bobines du couple sélectionné.

Selon un mode particulier de réalisation de ce procédé, le rapport $k_j/r_i$ est sélectionné de telle façon que, si $N_i$ (respectivement $N_j$) est le nombre de spires de la bobine $B_i$ (respectivement $B_j$) et $z_i$ (respectivement $z_j$) est la distance de la bobine $B_i$ (respectivement $B_j$) à la bobine émettrice E, alors la relation suivante est satisfaite :

$$N_j=(k_j/r_i)N_i(z_i/z_j)^2.$$

$k_j$ peut être choisi égal à 1 pour toute valeur de j, il peut être aussi proportionnel à $z_j$ ou à $z_j^2$ (ou $z_j$ est la cote du contre-récepteur $B_j$).

Il est également possible de choisir $r_i$=1.

Dans le cas où la distance entre deux bobines successives est constante, il est possible de sélectionner un couple de bobines successives. Dans ce cas, on obtient une profondeur d'investigation et une résolution verticale à peu près constantes et proportionnelles à la distance entre deux bobines successives.

Selon une variante de ce procédé, un traitement de filtrage des signaux est réalisé, qui permet de définir une zone sensible de forme rectangulaire, de hauteur égale à la résolution verticale du couple de bobines choisi, et de longueur égale au double de la profondeur d'investigation du couple de bobines choisi.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1, déjà décrite, représente schématiquement un outil de mesure connu selon l'art antérieur,
- les figures 2A et 2B représentent l'allure des caractéristiques verticale et radiale,
- la figure 3 est un exemple d'outil de mesure selon la présente invention,
- la figure 4 est un schéma des zones correspondant à la résolution verticale et à la profondeur d'investigation d'un outil selon l'invention.

Description détaillée de modes de réalisation de l'invention

Les notions de résolution verticale et de profondeur d'investigation vont d'abord être rappelées, en liaison avec les figures 2A et 2B. D'une façon générale, si une bobine émettrice induit dans un milieu à mesurer des courants de Foucault, qui produisent ensuite à leur tour une induction dans une bobine réceptrice R, et si l'on appelle e le signal mesuré (tension induite aux bornes du récepteur), on a la relation suivante :

$$e=k\iiint_{\text{volume du terrain}} \sigma(x,y,z)S(x,y,z)dxdydz$$

où :

- k est une constante, $k=N_R\omega^2$ , ($N_R$ étant le nombre de spires et $\omega=2\pi f$ , f étant la fréquence du courant induit),
- $\sigma(x,y,z)$ est la conductivité électrique du terrain au point (x,y,z),
- S(x,y,z) est la sensibilité au point (x,y,z). Plus S est grand, plus le signal venant du point (x,y,z) de la formation est grand.

On peut se placer en coordonnées cylindriques $r,\theta,z$, l'axe z étant parallèle à celui du forage. En supposant une répartition des terrains indépendante de l'angle $\theta$, on définit la caractéristique radiale :

$$G_r(r) = \int_{-\infty}^{+\infty}S(r,z)dz$$

Dans cette caractéristique, on peut déduire la "profondeur d'investigation", qui est la profondeur $r_i$ pour laquelle l'aire sous la courbe $G_r(r)$ atteint 50% de la valeur totale de l'aire (voir figure 2A).

On définit ainsi la caractéristique verticale $G_v$ :

$$G_v(z) = \int_0^\infty S(z,r)dr$$

On peut déduire de cette courbe la "résolution verticale" $r_v$, qui est la largeur à mi-hauteur de la courbe (voir figure 2B).

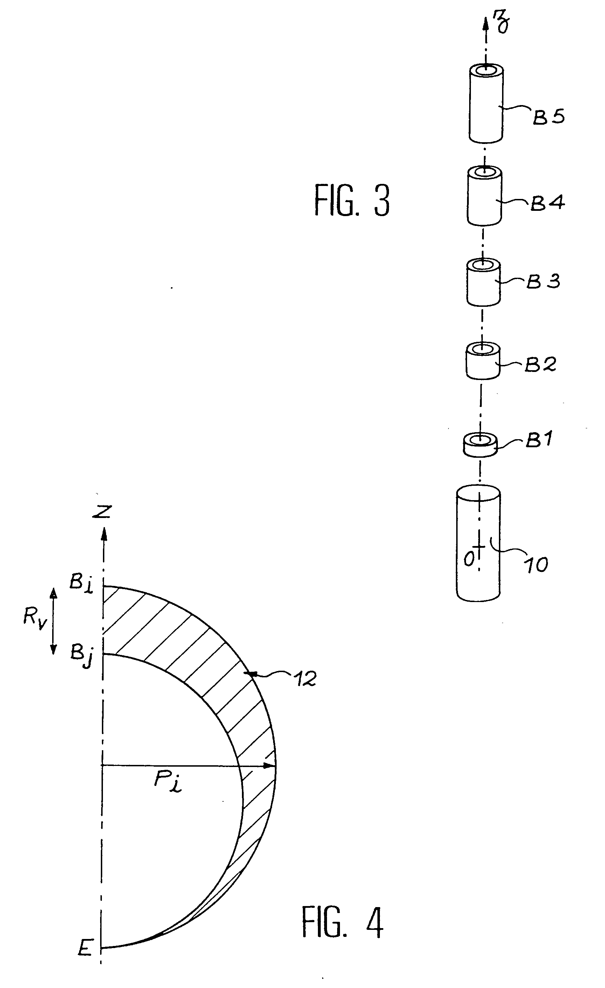

Un appareil conforme à la présente invention va maintenant être décrit, en liaison avec la figure 3. Sur cette figure, la référence 10 désigne un émetteur qui permet de générer un champ magnétique variable dans le temps, en tout point de l'espace à étudier, par exemple un champ présentant une variation sinusoïdale. La position de cette bobine émettrice est prise comme origine sur un axe z, confondu avec l'axe de la bobine. Cet appareil comprend en outre une succession de bobines $B_i$ (il y en a cinq sur la figure 3), chacune ayant un nombre de spires $N_i$. Ces bobines permettent de mesurer le champ magnétique produit par les courants de Foucault engendrés par le champ de l'émetteur 10 dans le terrain conducteur étudié. Elles sont reliées à des moyens d'amplification des signaux.

L'appareil comprend en outre des moyens numériques (comportant un micro-ordinateur convenablement programmé à cet effet), non représentés sur la figure 3, qui sont en général placés à la surface et reliés à la structure bobine émettrice-bobines réceptrices, et qui permettent de sélectionner un couple $B_i$, $B_j$ de bobines réceptrices et de réaliser la différence pondérée entre les signaux $S_i$, $S_j$ de ces deux bobines. Cette différence pondérée sera notée : $D_{ij}=r_iS_{i-kj}S_j$ .

Ces moyens numériques peuvent également comprendre des moyens pour traiter (par exemple par filtrage), analyser et/ou mémoriser les signaux reçus des bobines de réception.

L'appareil peut en outre comprendre des moyens pour déplacer l'ensemble émetteur-récepteurs. Ces derniers sont par exemple montés sur un support commun, comme décrit par exemple dans le document US-5 157 605, ledit support commun permettant de déplacer les bobines d'un lieu de mesure à un autre, le déplacement étant contrôlé à partir de la surface, par exemple à l'aide des moyens numériques déjà mentionnés.

L'expression la plus simple de $D_{ij}$, prise par la suite, est celle pour laquelle le coefficient $r_i$=1. Il est clair que l'invention n'est pas limitée à cet exemple et comprend également toute valeur de $r_i$.

On définit le contre-récepteur comme étant le récepteur $B_j$ dont le signal $S_j$ est soustrait du signal $S_i$ du récepteur $B_i$. Le rôle du contre-récepteur est de focaliser la mesure.

Le fait de réaliser numériquement la différence entre les signaux du récepteur et du contre-récepteur, à la surface, permet de choisir, de façon totalement libre, les couples récepteurs-contre-récepteurs et conduit surtout à un nombre d'outils (couple récepteur-contre-récepteur) supérieur à celui des bobines connu selon l'art antérieur.

En outre, l'étude des facteurs de forme a permis de montrer que les caractéristiques d'un outil (résolution verticale $R_{vi}$, profondeurs d'investigation $P_i$) peuvent être approchées par les formules suivantes :

$$\begin{cases} R_v = \sqrt{2}(z_i - z_j) \\ P_i = z_i + z_j \end{cases}$$

où $z_i$ et $z_j$ sont respectivement les distances du récepteur $B_i$ et du contre-récepteur $B_j$ à l'émetteur 10. Ces formules sont suffisamment justes dans le cas général d'émetteurs et de récepteurs réels, pour constituer un modèle des outils à induction. On obtient donc une résolution verticale $R_{vi}$ et une profondeur d'investigation $P_i$ qui est caractéristique de chaque couple récepteur-contre-récepteur. Finalement c'est l'opérateur qui, en vue des mesures à effectuer, choisit le couple récepteur-contre-récepteur le mieux adapté au milieu à étudier, et qui définit par là même la profondeur d'investigation et la résolution verticale de l'outil choisi. Cet appareil permet de garder une très grande souplesse dans le choix des récepteurs et des contre-récepteurs.

Il a été dit ci-dessus que le contre-récepteur permet de focaliser la mesure. En fait, cette focalisation est parfaite quand le facteur de forme vertical est nul entre l'émetteur et le contre-récepteur, ce qui correspond au cas où le nombre de spires des deux récepteurs Bi et Bj satisfait à la relation suivante :

$$N_i=k_jN_j(z_i/z_j)^2.$$

Selon cette formule, c'est le produit du coefficient $k_j$ par le nombre de spires $N_j$ du contre-récepteur qui doit vérifier une contrainte. Le choix du coefficient $k_j$ se fait selon des critères extérieurs aux caractéristiques géométriques de l'outil. Cela peut être par exemple l'encombrement des bobines, le niveau du signal, le rapport signal/bruit ou les contraintes imposées par le domaine d'étude (taille du puits de forage). Par exemple, il est possible de choisir tous les coefficients $k_j$ égaux à 1. Le signal fourni par un outil de mesure est alors indépendant de la distance émetteur-récepteur, mais la taille des bobines croît avec le carré de la distance à l'émetteur.

Si les coefficients $k_j$ sont proportionnels à la cote du contre-récepteur, c'est le signal de chaque bobine qui est constant et la taille des bobines ne croît plus que linéairement avec la distance à l'émetteur.

Si les coefficients $k_j$ sont proportionnels au carré de la cote du contre-récepteur, le signal de chaque bobine décroît avec la distance mais leur taille est constante. Toute autre valeur des coefficients $k_j$ conduit à des variations d'amplitude de signaux différente, mais n'affecte pas les performances géométriques de l'outil de mesure choisi et, notamment, le choix de chaque coefficient $k_j$ peut être différent d'un couple récepteur-contre-récepteur à un autre couple récepteur-contre-récepteur.

Selon un cas particulier, il est possible de sélectionner, pour un couple récepteur-contre-récepteur, deux bobines successives $B_{i-1}$ et $B_i$. Dans ce cas, si la distance entre deux bobines successives est constante (égale à $\Delta B$) l'expression des caractéristique $R_{vi}$ et $P_i$ est simple : $R_{vi} = \sqrt{2} \cdot \Delta B$ et $P_i = 2\Delta B + P_{i-1}$.

Ainsi, un outil conforme à celui décrit en liaison avec la figure 3 a été réalisé (5 bobines réceptrices) avec $\Delta B$ à peu près égal à 21,5cm. Cela conduit à 5 outils de base (on appelle outil de base un couple récepteur-contre-récepteur pour lequel le contre-récepteur est immédiatement voisin du récepteur) de résolution verticale d'environ 33cm et de profondeur d'investigation variant par pas de 43cm, à partir de 23,5cm.

La puissance d'une telle structure réside dans la possibilité de définir plusieurs autres outils, selon le rang du contre-récepteur par rapport au récepteur, c'est-à-dire selon la distance entre le contre-récepteur et le récepteur. Ainsi, si le contre-récepteur et le récepteur ne sont pas immédiatement voisins mais sont séparés par une bobine, il est possible de définir, par exemple dans le cas de la figure 3, quatre outils de résolution verticale environ 66cm et de profondeur d'investigation variant selon le même pas $\Delta P$ que précédemment, à partir de 45,1cm. On peut également sélectionner un récepteur et un contre-récepteur séparés par deux bobines intermédiaires, ce qui correspond à 3 outils possibles pour le cas particulier illustré sur la figure 3, avec une résolution verticale de 99cm et une profondeur d'investigation variant linéairement selon le pas $\Delta P$ à partir de 66,7cm.

Afin de mieux mesurer le champ magnétique provenant des courants de Foucault, il peut être parfois nécessaire de s'affranchir du champ émis directement par l'émetteur 10 dans les bobines $B_i$. Ceci se fait en mettant en série, sur chaque outil, une bobine de compensation. Afin de garder toute la souplesse dans la détermination des outils, il est possible de réaliser une bobine de compensation pour chaque bobine, et les mesures transmises à la surface à partir de chaque bobine sont donc intrinsèquement propres. Si on appelle $B_{ci}$ la bobine de compensation associée à la bobine $B_i$, le nombre de bobines $N_{ci}$ de cette bobine de compensation, pour une compensation optimale, dépend de sa position par rapport à la bobine $B_i$. Cette dépendance est donnée par la relation :

$$N_{ci} = N_i \cdot (z_{ci}/z_i)^3.$$

Toutes les positions de la bobine de compensation $B_{ci}$ par rapport à la bobine $B_i$ sont permises. Il est possible de placer toutes les bobines $B_{ci}$ entre l'émetteur E et le premier récepteur $B_1$, afin de diminuer le nombre de spires et donc la taille des bobines de compensation, et donc de minimiser leur influence sur les facteurs de forme.

Il a été donné ci-dessus la condition pour que le facteur de forme vertical soit nul entre un émetteur et un contre-récepteur. En fait, ceci ne correspond pas toujours au cas où la zone fournissant le signal est rectangulaire (de hauteur égale à la résolution verticale et de longueur égale au double de la profondeur d'investigation). Comme illustré sur la figure 4, une telle zone a plutôt la forme d'un croissant 12. La région conduisant à la résolution verticale correspond au point situé entre le récepteur $B_i$ et le contre-récepteur $B_j$, alors que les zones représentatives de la profondeur d'investigation sont plutôt situées à mi-chemin entre l'émetteur $B_i$ et le contre-récepteur $B_j$. Cela signifie que les caractéristiques géométriques ($R_{vi}$ et $P_i$) des outils sélectionnés ne sont pas complètement représentatives des aspects bidimensionnels. Dans un tel cas, il n'est pas possible de dire que l'outil à induction permet de mesurer une tranche de hauteur égale à la résolution verticale.

Pour obtenir réellement une zone rectangulaire, possédant les bonnes caractéristiques géométriques, il est alors possible de traiter les signaux mesurés le long du puits, par exemple par un traitement de type filtrage. Un tel procédé de filtrage a été décrit dans le brevet US-5 157 605, où ce procédé est à base d'opérations de convolution. Ainsi, si $m_i$ est la mesure après traitement, $s_j$ la mesure avant traitement, N le nombre d'outils sélectionnés, $a_{ij}$ le filtrage de signal j pour la mesure i, on peut écrire :

$$m_i(z) = \sum_{j=1}^{N} a_{ij}(z)^* S_j(z).$$

Cette opération fait intervenir une convolution qui rend difficile le calcul des filtres car des mesures à des côtes différentes agissent au même point. Il est possible de rechercher une transformation mathématique permettant un calcul facile des filtres en supprimant la convolution. Par exemple, il est possible de recourir à une transformation de Fourier, l'expression précédente devenant :

$$M_i(\nu) = \sum_{j=1}^{N} A_{ij}(\nu) S_j(\nu).$$

$M_i$, $S_j$ et $A_{ij}$ sont les transformées de Fourier de $m_i$, $s_j$ et $a_{ij}$ et $\nu$ est la fréquence spatiale (ou variable duale de la cote z). Dans cette expression la détermination des filtres à une fréquence spatiale est indépendante des autres fréquences. La méthode est donc très puissante puisqu'il est alors possible de choisir la plage fréquentielle reconstituée ainsi que la précision voulue par le choix d'une apodisation adéquate.

La détermination des filtres se ramène à la résolution d'un système linéaire. Il est possible de forcer ce système à une forme carrée, ce qui conduit à choisir un nombre très restreint de rayons pour lesquels la réponse est contrainte. Cependant, en dehors de ces rayons le signal est très mal piloté. Pour obtenir un outil performant, il faut augmenter le nombre de rayons de contrainte, le système linéaire étant alors rectangulaire. Sa résolution peut se faire de manière itérative et approchée par la méthode des moindres carrés, comme dans les brevets US-5 157 605.

Il est également possible de proposer une méthode dite méthode de la pseudo-inverse, bien adaptée à ces problèmes, et qui conduit directement à l'optimum. Ainsi, si l'on note, sous forme matricielle, le système linéaire précédent :

$$|M|=|S|.|A|$$

où M est la matrice des contraintes, S la matrice rectangulaire des mesures et A celle des filtres inconnus. La pseudo-inverse $S^+$ s'écrit :

$$|S|^+=(|S|^T.|S|)^{-1}|S|^T$$

où $S^T$ est la transposée de S. Le calcul de la pseudo-inverse étant simple, la détermination des filtres s'obtient simplement, et avec la précision maximale, par le produit matriciel :

$$|A|=|S|^+.|M|$$

Le filtrage des mesures peut se faire en différé dans le domaine de Fourier, mais il est également possible, et souvent préférable, de l'effectuer en temps réel par l'utilisation de la représentation spatiale des filtres par déconvolution, les filtres dans le domaine spatial étant obtenus par transformée inverse. Ainsi, l'opérateur accède en temps réel aux caractéristiques du terrain. Pour chaque opération de filtrage choisie, il suffit de programmer les moyens numériques (micro-ordinateurs) déjà mentionnés ci-dessus de manière correspondante à ladite opération de filtrage.

## Revendications

1. Dispositif de mesure par induction des caractéristiques d'un milieu comportant :

   - une bobine émettrice (10),
   - n bobines réceptrices, $B_k$, k=1, 2,...n, avec n≥3,

   caractérisé en ce qu'il comprend des moyens numériques pour sélectionner un couple $B_i$, $B_j$ de bobines réceptrices et pour réaliser une différence pondérée $D_{ij}=r_iS_i-k_jS_j$ entre les signaux $S_i$, $S_j$ des deux bobines du couple sélectionné, $r_i$ et $k_j$ étant des coefficients de pondération affectés aux signaux respectifs $S_i$ et $S_j$.

2. Dispositif selon la revendication 1, le rapport $k_j/r_i$ étant sélectionné de telle façon que, si $N_i$ (respectivement $N_j$) est le nombre de spires de la bobine $B_i$ (respectivement $B_j$) et $z_i$ (respectivement $z_j$) est la distance de la bobine $B_i$ (respectivement $B_j$) à la bobine émettrice E, la relation suivante est satisfaite :

   $$N_j=(k_j/r_i)N_i.(z_i/z_j)^2.$$

3. Dispositif selon l'une des revendications 1 ou 2, $k_j$ étant égal à 1 pour toute valeur de j, ou bien proportionnel à $z_j$ ou bien proportionnel à $z_j^2$.

4. Dispositif selon l'une des revendications 1 à 3, $r_i$ étant égal à 1.

5. Dispositif selon l'une des revendications précédentes, la distance entre deux bobines étant constante.

6. Dispositif selon l'une des revendications précédentes, comportant en outre des moyens pour s'affranchir du champ émis directement par l'émetteur.

7. Dispositif selon la revendication 6, une bobine de compensation $B_{ci}$ étant montée en série avec chaque bobine $B_i$.

8. Dispositif selon la revendication 7, la relation suivante étant vérifiée : $N_{ci}=N_i(z_{ci}/z_i)^3$, où $N_{ci}$ est le nombre de spires de la bobine $B_{ci}$ et $z_{ci}$ la distance de la bobine $B_{ci}$ à l'émetteur E.

9. Dispositif selon l'une des revendications 7 ou 8, les bobines de compensation $B_{ci}$ étant disposées entre la bobine émettrice E (10) et la première bobine de réception $B_1$ la plus proche de E.

10. Procédé de mesure par induction des caractéristiques d'un milieu, comportant les étapes suivantes :

    - induire des courants de Foucault dans le milieu avec une bobine émettrice (10),
    - recevoir des signaux, en réponse aux courants de Foucault induits précédemment, dans n bobines réceptrices $B_k$, k=1, 2,...n, n≥3,

caractérisé en ce qu'il comprend une étape pour sélectionner un couple $B_i$, $B_j$ de bobines parmi les n bobines réceptrices et pour réaliser une différence pondérée $D_{ij}=r_iS_i-k_jS_j$ entre les signaux $S_i$, $S_j$ des deux bobines du couple sélectionné, $r_i$ et $k_j$ étant des coefficients de pondération affectés aux signaux respectifs $S_i$ et $S_j$.

11. Procédé selon la revendication 10, le rapport $k_j/r_i$ étant sélectionné de telle façon que, si $N_i$ (respectivement $N_j$) est le nombre de spires de la bobine $B_i$ (respectivement $B_j$) et $z_i$ (respectivement $z_j$) est la distance de la bobine $B_i$ (respectivement $B_j$) à la bobine émettrice E, la relation suivante est satisfaite :

$$N_j=(k_j/r_i)N_i.(z_i/z_j)^2.$$

12. Procédé selon l'une des revendications 10 ou 11, $k_j$ étant égal à 1 pour toute valeur de j, ou bien proportionnel à $z_j$ ou bien proportionnel à $z_j^2$.

13. Procédé selon l'une des revendications précédentes, $r_i$ étant égal à 1.

14. Procédé selon l'une des revendications précédentes, la distance entre deux bobines consécutives étant constante et le couple de bobines sélectionné étant un couple de bobines consécutives $(B_i, B_{i+1})$.

15. Procédé selon l'une des revendications 10 à 14, un traitement de filtrage des signaux mesurés étant réalisé, qui permet de définir une zone sensible de forme rectangulaire, d'une hauteur égale à la résolution verticale du couple de bobines choisi, et de longueur égale au double de la profondeur d'investigation du couple de bobines choisi.

**Patentansprüche**

1. Vorrichtung zum Messen der Eigenschaften eines Milieus mittels Induktion, die folgendes umfaßt:

   - eine Emissionsspule (10),
   - n Empfangsspulen $B_k$, k = 1, 2, ... n, wobei n $\geq$ 3,

   dadurch gekennzeichnet, daß sie numerische Mittel umfaßt, um ein Paar Empfangsspulen $B_i$, $B_j$ auszuwählen und eine gewichtete Differenz $D_{ij} = R_iS_i - k_jS_j$ zwischen den Signalen $S_i$, $S_j$ der beiden Spulen des ausgewählten Paars vorzunehmen, wobei $r_i$ und $k_j$ Wichtungskoeffizienten sind, die den jeweiligen Signalen $S_i$ und $S_j$ zugewiesen wurden.

2. Vorrichtung gemäß Anspruch 1, wobei das Verhältnis $k_j/r_i$ so ausgewählt wird, daß wenn $N_i$ (bzw. $N_j$) der Anzahl der Windungen der Spule $B_i$ (bzw. $B_j$)

und $z_i$ (bzw $z_j$) dem Abstand der Spule $B_i$ (bzw. $B_j$) zur Emissionsspule E entspricht, das folgende Verhältnis gewährleistet ist:

$$N_j = (k_j/r_i)N_i \bullet (z_i/z_j)^2.$$

3. Vorrichtung gemäß einem der Ansprüche 1 oder 2, wobei $k_j$ für alle Werte von j gleich 1 oder proportional zu $z_j$ oder proportional zu $z_j^2$ ist.

4. Vorrichtung gemäß einem der Ansprüche 1 bis 3, wobei $r_i$ gleich 1 ist.

5. Vorrichtung gemäß einem der voranstehenden Ansprüche, wobei der Abstand zwischen beiden Spulen konstant ist.

6. Vorrichtung gemäß einem der voranstehenden Ansprüche, die unter anderem Mittel dafür umfaßt, sich von dem durch den Emitter direkt abgegebenen Feld zu lösen.

7. Vorrichtung gemäß Anspruch 6, wobei in Reihe zu jeder Spule B; eine Kompensationsspule $B_{ci}$ installiert ist.

8. Vorrichtung gemäß Anspruch 7, bei der das folgende Verhältnis gewährleistet ist: $N_{ci} = N_i(z_{ci}/z_i)^3$, wobei $N_{ci}$ der Anzahl der Windungen der Spule $B_{ci}$ und $z_{ci}$ dem Abstand zwischen der Spule $B_{ci}$ und dem Emitter E entspricht.

9. Vorrichtung gemäß einem der Ansprüche 7 oder 8, wobei die Kompensationsspulen $B_{ci}$ zwischen der Emissionsspule E (10) und der ersten, E am nächsten gelegenen Empfangsspule $B_1$ positioniert sind.

10. Verfahren zum Messen der Eigenschaften eines Milieus mittels Induktion, das die folgenden Schritte umfaßt:

    - Induktion von Foucaultschen Strömen im Milieu mit Hilfe einer Emissionsspule (10),
    - Empfang der in Reaktion auf die zuvor induzierten Foucaultschen Ströme emittierten Signale in n Empfangsspulen $B_k$, k = 1, 2, ... n, wobei n $\geq$ 3, dadurch gekennzeichnet, daß es einen Schritt umfaßt, um ein Paar Empfangsspulen $B_i$, $B_j$ auszuwählen und eine gewichtete Differenz $D_{ij} = R_iS_i - k_jS_j$ zwischen den Signalen $S_i$, $S_j$ der beiden Spulen des ausgewählten Paars vorzunehmen, wobei $r_i$ und $k_j$ Wichtungskoeffizienten sind, die den jeweiligen Signalen $S_i$ und $S_j$ zugewiesen wurden.

11. Verfahren gemäß Anspruch 10, wobei das Verhält-

nis $k_j/r_i$ so ausgewählt wird, daß wenn $N_i$ (bzw. $N_j$) der Anzahl der Windungen der Spule $B_i$ (bzw. $B_j$) und $z_i$ (bzw $z_j$) dem Abstand der Spule $B_i$ (bzw. $B_j$) zur Emissionsspule E entspricht, das folgende Verhältnis gewährleistet ist:

$$N_j = (k_j/r_i)N_i \bullet (z_i/z_j)^2.$$

12. Verfahren gemäß einem der Ansprüche 10 oder 11, wobei $k_j$ für alle Werte von j gleich 1 oder proportional zu $z_j$ oder proportional zu $z_j^2$ ist.

13. Verfahren gemäß einem der voranstehenden Ansprüche, wobei $r_i$ gleich 1 ist.

14. Verfahren gemäß einem der voranstehenden Ansprüche, wobei der Abstand zwischen zwei aufeinanderfolgenden Spulen konstant ist und es sich bei dem ausgewählten Spulenpaar um zwei aufeinanderfolgende Spulen ($B_i$, $B_{i+1}$) handelt.

15. Verfahren gemäß einem der Ansprüche 10 bis 14, wobei eine Filtrierung der gemessenen Signale vorgenommen wird, die es ermöglicht, einen empfindlichen Bereich von rechtwinkliger Form zu bestimmen, dessen Höhe der vertikalen Auflösung des ausgewählten Spulenpaars und dessen Länge dem Doppelten der Untersuchungstiefe des ausgewählten Spulenpaars entspricht.


**Claims**

1. Device for measuring by induction the characteristics of a medium including:

   - an emitting coil (10),
   - n receiving coils, $B_k$, k=1 ...n, with n ≥ 3,
   - digital means for selecting a pair $B_i$, $B_j$ of receiving coils and for embodying a weighted difference $r_iS_i - k_jS_j$ between the signals $S_i$, $S_j$ of the two coils of the selected pair, $r_i$ and $r_j$ being weighting coefficients allocated to the respective signals $S_i$ and $S_j$.

2. Device according to claim 1, the ratio $k_j/r_i$ is selected so that, if $N_i$ (respectively $N_j$) is the number of turns of the coil $B_i$ (respectively $B_j$) and $z_i$ (respectively $Z_j$) is the distance of the coil $B_i$ (respectively $B_j$) to the emitting coil E, the following equation is satisfactory:

$$N_j = (k_j/r_i) N_i (z_i/z_j)^2,$$

3. Device according to claim 1 or 2, $k_j$ being equal to 1 for any value of j, or even proportional to $z_j$ or proportional to $z_j^2$.

4. Device according to one of the claims 1 to 3, $r_i$ being equal to 1.

5. Device according to any one of the preceding claims, the distance between two coils being constant.

6. Device according to any one of the preceding claims and further comprising means to be freed of the field directly emitted by the transmitter.

7. Device according to claim 6, a compensation coil $B_{ci}$ being mounted in series with each coil $B_1$.

8. Device according to claim 7, the following equation being verified: $N_{ci} = N_i (z_{ci}/z_i)^3$ where $N_{ci}$ is the number of turns of the coil $B_{ci}$ and $z_{ci}$ represents the distance between the compensation coil $B_{ci}$ and the transmitter E.

9. Device according to claim 7 or 8, the compensation coils $B_{ci}$ being disposed between the emitting coil E (10) and the first receiving coil $B_1$ nearest E.

10. Method for induction measuring the characteristics of a medium and comprising the following stages:

    - induction of eddy currents in said medium with the aid of a transmitting coil (10)
    - receiving of signals in n receiving coils, $B_k$, k=1, 2, ... n, with n ≥ 3 in response to the induced eddy currents,

    characterized in that it comprises a stage of selecting

    - a pair $B_i$, $B_j$ of coils from the n receiving coils,
    - and for implementing the weighted difference $D_{ij} = r_iS_i - k_jS_j$ between the signals $S_i$, $S_j$ of the two coils of the selected pair, $r_i$ and $r_j$ being weighting coefficients allocated to the respective signals $S_i$ and $S_j$.

11. Method according to claim 10, the ratio $k_j/r_i$ being selected so that, if $N_i$ (respectively $N_j$) is the number of turns of the coil $B_i$ (respectively $B_j$) and $z_i$ (respectively $z_j$) is the distance from the coil $B_i$ (respectively $B_j$) to the emitting coil E, the following equation is then satisfied:

$$N_j = (k_j/r_i) N_i (z_i/z_j)^2.$$

12. Method according to claim 10 or 11, $k_j$ being equal to 1 for any value of j or even proportional to $z_j$ or to $z_j^2$.

**13.** Method according to one of the preceding claims, $r_i$ being equal to 1.

**14.** Method according to any one of the preceding claims, the distance between two consecutive coils being constant and the selected pair of coils being a pair of consecutive coils ($B_i$, $B_{i+1}$).

**15.** Method according to one of the claims 10 to 14 with a treatment for filtering the measured signals making it possible to define a sensitive rectangular-shaped zone with a height equal to the vertical resolution of the selected pair of coils and with a length equal to twice the investigation depth of the selected pair of coils.

FIG. 2 A

FIG. 2 B

FIG. 1

FIG. 3

FIG. 4